# EUROPEAN PATENT APPLICATION

(11) **EP 1 983 777 A1**
(43) Date of publication of application: **22.10.2008**
(21) Application number: 06805033.5
(22) Date of filing: 23.10.2006
(51) Int. Cl.: H04Q 7/30

(54) **METHOD,SYSTEM AND CONTROL DEVICE FOR DISASTER RECOVERY OF RNC NODES**

(30) Priority: 10.02.2006 CN 200610007419
(71) Applicant: Huawei Technologies Co., Ltd., Longgang District Shenzhen 518129 (CN)
(72) Inventor: YONG, Wenyuan, Guangdong 518129 (CN)
(74) Representative: Casalonga, Axel
(86) International application number: PCT/CN2006/002826
(87) International publication number: WO 2007/090323

(57) **Abstract**

A method for disaster tolerance of BSC nodes is disclosed, including: a BS monitors whether the connection state with a BSC is normal, and attempts to establish connection with another BSC when it is monitored that the current connection is interrupted; the BS determines whether the connection with the another BSC is successful, if the connection with the another BSC is successful, the BS provides service via the another BSC, otherwise, the BS go on attempting to establish connection until connecting to a BSC successfully. A system for disaster tolerance of BSC nodes is also disclosed, includes a CN, BSs and at least two BSCs, the BSs have physical connections with the BSCs respectively. Apparatuses for controlling disaster tolerance at BS side and at BSC side are also disclosed. The method, system and apparatus according to the present invention can implement the backup for disaster tolerance of BSC nodes.

## Description

### FIELD OF THE INVENTION

The present invention relates to wireless networking technology, and particularly to a method, system and control apparatus for disaster tolerance of BSC nodes.

### BACKGROUND

Universal Mobile Telecommunications System (UMTS) includes Radio Access Network (RAN) and Core Network (CN). The CN handles all the voice calls and data connections in the UMTS, and performs switching and routing functions with external networks. The CN is logically partitioned into a Circuit Switching (CS) domain and a Packet Switching (PS) domain. UMTS Terrestrial Radio Access Network (UTRAN) includes one or more Radio Network Subsystems (RNS). A RNS includes a Radio Network Controller (RNC) and one or more Base Stations (NodeBs). The interface between a RNC and a CN is an Iu interface. The interface between a NodeB and a RNC is an Iub interface. Inside the UTRAN, RNCs are interconnected via Iur interfaces, which may be direct physical connections or transmission network connections. A RNC allocates and controls radio resources for a NodeB connected or associated with the RNC. The NodeB performs the transformation of data stream between an Iub interface and a Uu interface, and takes part in a portion of radio resource management, where the Uu interface is an interface between a User Equipment (UE) and a UTRAN.

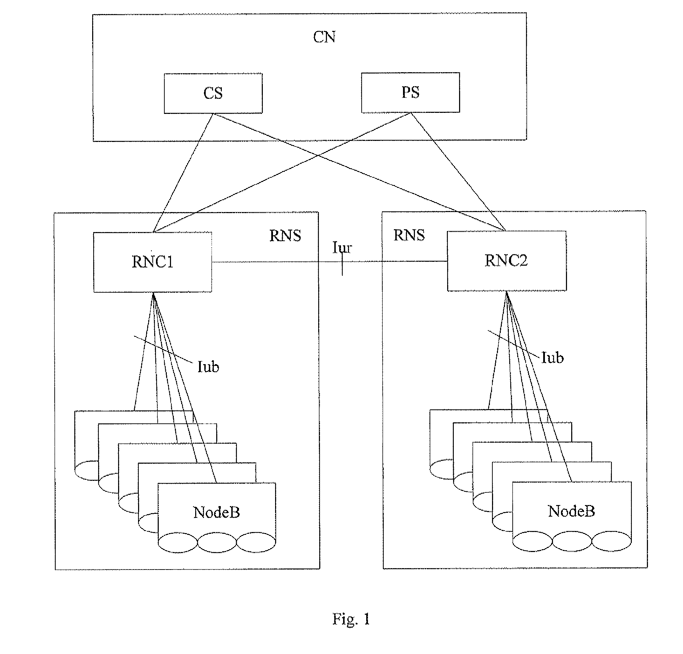

Fig. 1 shows the location of a RNC in a UMTS network. As shown in Fig.1, traffic is transmitted from a NodeB to a CN via a RNC connected with the NodeB. If the RNC fails, all paths from NodeBs controlled by the RNC to the CN are interrupted, and all areas covered by these NodeBs cannot be served. This demands a very high reliability of products. Currently the reliability of device has been improved by measures such as key parts redundancy and so on, however in consideration of the network reliability in cases of fire hazard, earthquake, electric power failure, intended destruction and so on occurred at the equipment room or building where the RNC resides, there needs a method for disaster tolerance at the level of RNC nodes.

As shown in Fig.1, a NodeB is connected to only one RNC in the existing network. If the RNC fails or encounters some accidental disaster, all NodeBs controlled by the RNC will be out of service.

Typically a RNC has a very large capacity and manages a large number of NodeBs. The existing network does not take the disaster tolerance at the level of RNC nodes into consideration, and therefore the fault of a RNC may lead the UMTS network to service interruption in large area.

### SUMMARY

An embodiment of the present invention provides a method for disaster tolerance of Base Station Controller (BSC) nodes to solve the problem of service interruption due to fault at a BSC node.

An embodiment of the present invention provides a system for disaster tolerance of BSC nodes to provide a networking structure for disaster tolerance of BSC nodes.

An embodiment of the present invention provides an apparatus for controlling disaster tolerance at Base Station (BS) side to solve the problem caused by fault of a BSC node through the control at BS side.

An embodiment of the present invention provides an apparatus for controlling disaster tolerance at BSC side to implement backup for disaster tolerance of BSC nodes through the control at BSC side.

An embodiment of the present invention provides a method for disaster tolerance of BSC nodes, where a BS establishes physical connections with two or more BSCs, transmission configurations corresponding respectively to the BSCs are configured in the BS, and connection is established with a first BSC by the BS using a corresponding first transmission configuration, the method includes steps of:

a) monitoring, by the BS, whether the current connection state with the first BSC is normal, and returning to step a) if the current connection state with the first BSC is normal; otherwise, selecting a second transmission configuration from the transmission configurations configured in the BS and proceeding to step b);

b) attempting, by the BS, to establish connection with a second BSC using corresponding second transmission configuration;

c) determining, by the BS, whether the connection with the second BSC is successful, and providing service via the second BSC if the connection with the second BSC is successful; otherwise, selecting again a transmission configuration from the transmission configurations configured in the BS as the second transmission configuration and proceeding to step b.

An embodiment of the present invention provides a system for disaster tolerance of BSC nodes, comprising a CN, BSs and at least two BSCs; a BS is adapted to have physical connections with the BSCs respectively, be connected with one BSC at a time, and establish connection with another BSC having physical connection with the BS when it is monitored that the connection state with the current BSC is abnormal.

The method and system for disaster tolerance of BSC nodes according to the present invention solves the problem of service interruption due to fault at a BSC node by means of addition of BSC nodes. In particularly, each BS connects to at least two BSC nodes and provides service via one of the BSC nodes. The BS monitors in real time the connection state with the BSC providing service currently, so that the BS can monitor the abnormality or interruption of the connection and select to establish connection with a backup BSC actively in time. In this way, even when a BSC fails in a network, another BSC may provide reliable services.

An embodiment of the present invention provides an apparatus for controlling disaster tolerance at BS side, comprising a transmission configuration setting unit, a first monitoring unit, and a first connection attempting unit; the transmission configuration setting unit is adapted to set transmission configurations corresponding to respective BSCs; the first monitoring unit is adapted to monitor the connection state with a BSC, and send the monitored connection state to the first connection attempting unit; the first connection attempting unit is adapted to obtain a transmission configuration from the transmission configuration setting unit according to the received connection state with the BSC, and attempt to establish connection with a BSC corresponding to the transmission configuration.

The apparatus for controlling disaster tolerance at BS side allows monitoring the connection state with a BSC, and connecting again to another BSC in time when the connection state is abnormal.

An embodiment of the present invention provides an apparatus for controlling disaster tolerance at BSC side, comprising a transmission parameter setting unit, a second connection attempting unit, and an initializing unit; the transmission parameter setting unit is adapted to set transmission parameters corresponding to BSs; the second connection attempting unit is adapted to obtain transmission parameters corresponding to a BS from the transmission parameter setting unit, attempt to establish connection with the BS according to the transmission parameters, and send a message indicating the successful connection to the initializing unit; the initializing unit is adapted to initialize the BS which has been connected successfully.

The apparatus for controlling disaster tolerance at BSC side allows establishing connection with BSs which are controlled by a faulty BSC, and implementing backup for disaster tolerance of BSC nodes.

In the networking process of a practical communication system, the risk of communication interruption due to factors such as fire hazard, accidental electric power failure, intended destruction encountered at a BSC, malfunction of the BSC itself, fault of the transmission link and so on may be resisted by means of deploying two or more BSCs at different locations, so as to guarantee the reliable connectivity of the communication network effectively.

### BRIEF DESCRIPTION OF THE DRAWINGS

Fig.1 shows the location of a RNC in a UMTS network in the prior art;

Fig.2 shows the networking structure of a system for disaster tolerance of RNC nodes according to an embodiment of the present invention.

Fig.3 is a control flowchart at NodeB side in a system for disaster tolerance of RNC nodes according to an embodiment of the present invention.

Fig.4 is a control flowchart at RNC side in a system for disaster tolerance of RNC nodes according to an embodiment of the present invention.

Fig.5 is a control flowchart at both NodeB side and RNC side in a system for disaster tolerance of RNC nodes according to an embodiment of the present invention.

Fig.6 shows the configuration of an apparatus for controlling disaster tolerance at NodeB side according to an embodiment of the present invention.

Fig.7 shows the configuration of an apparatus for controlling disaster tolerance at RNC side according to an embodiment of the present invention.

Fig.8 is a schematic diagram illustrating the network in a case that a RNC fails in a system for disaster tolerance of RNC nodes according to an embodiment of the present invention.

Fig.9 is a schematic diagram illustrating the network in a case that a RNC partly fails or a part of transmission links fail in a system for disaster tolerance of RNC nodes according to an embodiment of the present invention.

Fig.10 is a schematic diagram illustrating the network in a case that transmission links between a RNC and a CN are interrupted in a system for disaster tolerance of RNC nodes according to an embodiment of the present invention.

Fig.11 is a schematic diagram illustrating the network in a case that a CN connected with a RNC fails in a system for disaster tolerance of RNC nodes according to an embodiment of the present invention.

### DETAILED DESCRIPTION

For the purpose of thorough understanding for the object, advantage, technical solution of the present invention, detailed description to the present invention will be provided with specific embodiments.

Embodiments of the present invention aim at the disaster tolerance at the level of BSC nodes, and provide networking structure of a system for disaster tolerance of BSC nodes and corresponding technical solutions. The main idea lies in that: at least two backup BSC nodes are provided in the system for disaster tolerance of BSC nodes, there are physical connections between BSs and at least two BSCs in the system; when one of the BSCs fails, a backup BSC takes over the BSs controlled by the faulty BSC, so as to go on serving the users in the area covered by the BSs.

In a UMTS network, a BSC is called a Radio Network Controller (RNC). The mechanism of disaster tolerance at the level of BSC nodes will be described in detail, taking the disaster tolerance of RNC nodes in the UMTS network as an example.

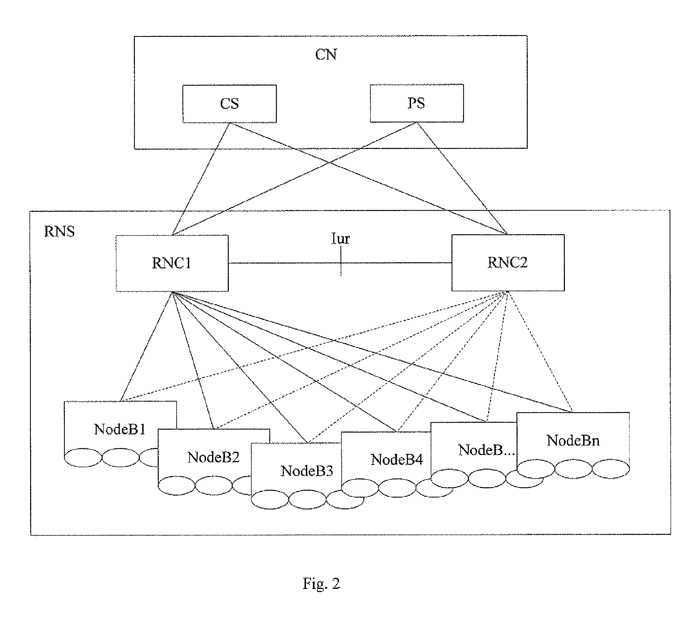

Fig.2 shows the networking structure of a system for disaster tolerance of RNC nodes according to an embodiment of the present invention. As shown in Fig.2, NodeB1, NodeB2, ..., NodeBn are connected with RNC1 in solid lines and connected with RNC2 in dashed lines. This indicates each of the NodeBs has physical connections with both RNCs, for example, each of the NodeBs establishes physical connections with RNC1 and RNC2 via IP network. Each of the NodeBs is configured with two transmission configurations used for connecting with RNC1 and RNC2 respectively. At a time, a NodeB selects one transmission configuration to establish connection with a RNC corresponding to the transmission configuration, so as to provide service for users. In Fig.2, the solid line between a NodeB and a RNC indicates that a connection is established between the NodeB and the RNC and services are provided; the dashed line between a NodeB and a RNC indicates that a physical connection is established between the NodeB and the RNC but services are not provided yet, and it is a backup for disaster tolerance at the level of RNC nodes.

In a networking structure of a system for disaster tolerance of RNC nodes, a NodeB may establish physical connections with more than two RNCs, accordingly, the NodeB need to be configured with transmission configurations corresponding to the respective RNCs. At a time, the NodeB selects one of transmission configurations to establish connection with a RNC corresponding to the transmission configuration, so as to provide service for users.

A method for implementing disaster tolerance of RNC nodes in the networking structure of a system for disaster tolerance of RNC nodes as shown in Fig.2 through controls at RNC side and NodeB side is introduced below.

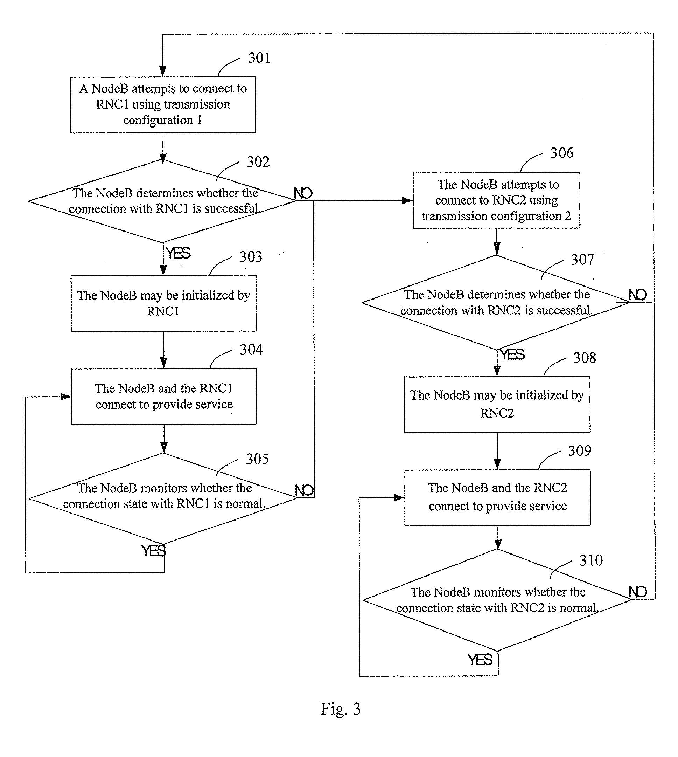

Fig.3 shows a control process at NodeB side in the system for disaster tolerance of RNC nodes as shown in Fig.2, the control process includes steps of:

Step 301: A NodeB attempts to establish connection with RNC1 using transmission configuration 1.

In the case of IP transmission, the transmission configuration is the IP address of the RNC. The NodeB uses the IP address of the RNC 1 to attempt to establish connection with the RNC1 through a procedure as defined in IP protocol.

Step 302: The NodeB determines whether the connection with RNC1 is successful. If the connection with RNC1 is successful, the process proceeds to Step 303; otherwise, the process proceeds to Step 306.

Step 303: The NodeB may be initialized by the RNC1 after the NodeB is successfully connected to the RNC1.

Step 304: The NodeB and the RNC1 provide network services to users.

Step 305: The NodeB monitors whether the connection state with the RNC1 is normal. If connection state with the RNC1 is normal, the process proceeds to Step 304 to go on normal service otherwise, the process proceeds to Step 306.

A transmission link typically supports monitoring of connection and disconnection of the link. In the case of no data transmission, an end A of the transmission link may transmit control messages to the other end B periodically and request the end B to make an acknowledgement. In the case of the transmission link is normal, the end B may receive at least one data packet from the end A in each cycle. If either end does not receive any data from the other end for more than one cycle, it deems that the transmission link fails and sends a fault indication to the other end. When the bidirectional transmission path of uplink and downlink between the end A and the end B employs separated transmission links, the two ends may monitor the connection and disconnection of the transmission link in either direction by means of above measures.

In the case of IP transmission, a Stream Control Transmission Protocol (SCTP) may be used to implement the transmission link between the RNC and the NodeB. The SCTP may send a Heart Beat message to the other end periodically, and the other end may send a Heart Beat Acknowledge message. When either end finds the transmission link is interrupted, it may send an Abort message to the other end.

Step 306: The NodeB attempts to establish connection with RNC2 using transmission configuration 2.

Step 307: The NodeB determines whether the connection with the RNC2 is successful. If the connection with the RNC2 is successful, the process proceeds to Step 308; otherwise, the process proceeds to Step 301.

Step 308: The NodeB may be initialized by the RNC2 after the NodeB is successfully connected to the RNC2.

Step 309: The NodeB and the RNC2 provide network service to users.

Step 310: The NodeB monitors whether the connection state with the RNC2 is normal. If the connection state with the RNC2 is normal, the process proceeds to Step 309 to go on normal service; otherwise, the process proceeds to Step 301.

The above control process at NodeB side is a loop process. If the NodeB is connected to the RNC successfully and provides service, the control process is at Step 304 or Step 309. In order to implement the disaster tolerance of the RNC nodes effectively, as shown at Step 305 or Step 310, the NodeB need to monitor whether the connection state with the RNC currently providing service is normal, so as to monitor conditions such as the RNC fault, transmission link interruption and so on, and connect to a normal RNC to provide service in time.

A new NodeB may also connect to the RNC successfully through above control process at NodeB side.

In the networking structure of a system for disaster tolerance of RNC nodes, a NodeB may establish physical connections with more than two RNCs. It is assumed that a NodeB has physical connections with three RNCs, i.e. RNC1, RNC2, RNC3, and is configured with respective transmission configuration 1, transmission configuration 2, and transmission configuration 3. In the case there are more than two backup RNC nodes, during the NodeB performs the control process of disaster tolerance of RNC nodes, the NodeB may attempt to establish connection with RNC2 using the transmission configuration 2 when the NodeB detects that the current transmission link with the RNC1 connected using the transmission configuration 1 is interrupted, if the connection attempt to the RNC2 fails, the NodeB may attempt to establish connection with the RNC3 using the transmission configuration 3. Such attempts for connection are performed in turn until a successful connection is established.

In the system for disaster tolerance of RNC nodes as shown in Fig.2, each RNC needs to be configured in advance with transmission parameters for connections with NodeBs controlled by the RNC itself, and may establish connections with respective NodeBs using the transmission parameters.

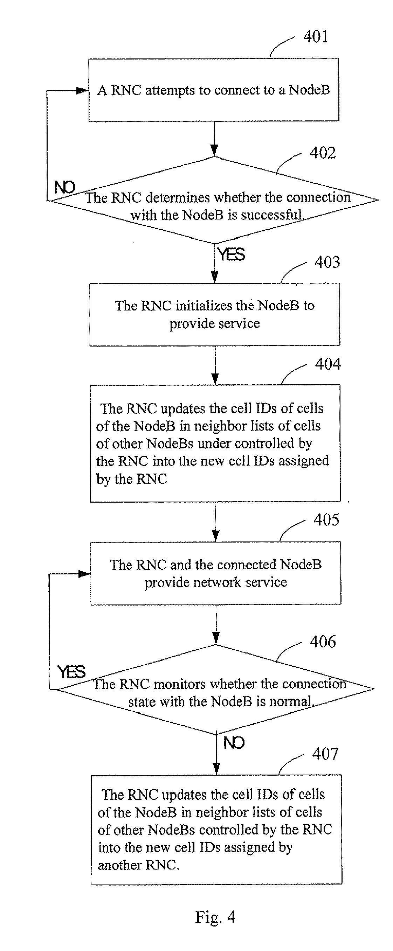

Fig.4 shows a control process at RNC side in the system for disaster tolerance of RNC nodes as shown in Fig.2, the control process includes steps of:

Step 401: A RNC attempts to establish connection with a NodeB.

When the NodeB originates to use the transmission configuration corresponding to the RNC to attempt to establish connection with the RNC, the RNC uses transmission parameters for connection with the NodeB to attempt to establish connection with the NodeB.

Step 402: The RNC determines whether the connection with the NodeB is successful. If the connection with the NodeB is successful, the process proceeds to Step 403; otherwise, the process returns to Step 401, where the RNC may keep attempting to establish connection with the NodeB.

Step 403: The RNC initializes the NodeB after the connection between the RNC and the NodeB is established successfully, and the RNC and the NodeB provide service in their coverage areas.

Parameters associated with all NodeBs controlled by the RNC are configured in the RNC, for example, parameters such as cell IDs and transmission powers of cells of each NodeB are configured in the RNC. A cell ID is typically composed of a RNC ID and a local ID inside the RNC.

The NodeB reports its state to the RNC after the connection between them is established. The RNC initiates the NodeB based on the channel parameters associated with the NodeB configured in the RNC itself, for example, the RNC configures transmission powers, channel codes, and cell IDs for the NodeB.

The procedure that the RNC assigns new cell IDs for cells of the NodeB in the process of initializing the NodeB may be implemented in the following manner: for example, the RNC assigns new cell IDs corresponding to the RNC for the cells of the NodeB after acquiring the information of the NodeB, by means of the standard NodeB Application Part (NBAP) process as defined in the 3GPP 25.433 protocol.

Step 404: Since the RNC assigns the new cell IDs for the cells of the NodeB, the RNC updates cell IDs of the cells of the NodeB in neighbor lists of cells of other NodeBs controlled by the RNC into the new cell IDs assigned by the RNC.

Step 405: The RNC and the NodeB provide normal service.

Step 406: The RNC monitors whether the connection state with the NodeB is normal. If the connection state with the NodeB is normal, the process proceeds to Step 405; if the connection with the NodeB is interrupted, the process proceeds to Step 407.

Step 407: The RNC deems the NodeB has connected to another RNC after the connection between the RNC and the NodeB is interrupted. As shown in Step 403, when the NodeB is connected to another RNC, another RNC may also initialize the NodeB, i.e., assign new cell IDs for cells of the NodeB. Therefore, the RNC updates cell IDs of the cells of the NodeB in neighbor lists of cells of other NodeBs controlled by the RNC into the new cell IDs assigned by the another RNC.

In the above control process at RNC side, when the RNC is normally connected with the NodeB, the Step 405 provides service; when the connection between the RNC and the NodeB is interrupted, the Step 401 waits the request for attempting connection from the NodeB.

In above networking structure of the system for disaster tolerance of RNC nodes, after a NodeB disconnects from a RNC and connects to a new RNC, the new RNC updates cell IDs of cells of the NodeB. At this time, in order to guarantee the communication between the cells of the NodeB and cells of other NodeBs, the cell IDs of the cells of the NodeB in perspective neighbor lists should be updated, i.e., the cell IDs assigned by the old RNC should be updated into the cell IDs assigned by the new RNC. This requires the old RNC to know which RNC the NodeB controlled by the old RNC currently reconnects to. To this end, when the connection state of a NodeB controlled by a RNC is changed, signaling interaction may be performed among RNCs which are backups for each other. For example, after a RNC establishes connection with a NodeB through Step 401 and Step 402, the RNC determines the old RNC which formerly controlled the NodeB according to the cell IDs of the NodeB, and then sends a message indicating that the NodeB has established connection with itself to the old RNC which formerly controlled the NodeB; after the old RNC which formerly controlled the NodeB receives the message, the old RNC may update cell IDs of the cells of the NodeB disconnected from the old RNC in neighbor lists of cells of other NodeBs controlled the old RNC into the new cell IDs assigned by the RNC currently connected with the NodeB.

In the system for disaster tolerance of RNC nodes, a RNC may also monitor whether the connection state between itself and a CN is normal. If the RNC detects that the connection with the CN is interrupted or it cannot connect to the CN, the RNC actively disconnects from all NodeBs controlled by itself, so as to allow the NodeBs to reconnects to another RNC to provide service. When a RNC cannot provide service normally due to fault of a CN or interruption of connection between the RNC and the CN, if the RNC actively disconnects from all the NodeBs controlled by itself, the NodeBs may monitor that the connections with the RNC are faulty and attempt to reconnect to another RNC through the process as shown in Fig.3. Therefore, not only disaster tolerance at the level of RNC nodes but also disaster tolerance at the level of CN nodes may be implemented, and then reliable service may be guaranteed to provide even when a CN in the network fails.

As discussed above, in the system for disaster tolerance of RNC nodes, both the RNC and the NodeB may solve the problem due to interruption of connection between the RNC and the NodeB or due to fault of the RNC through the controls of themselves.

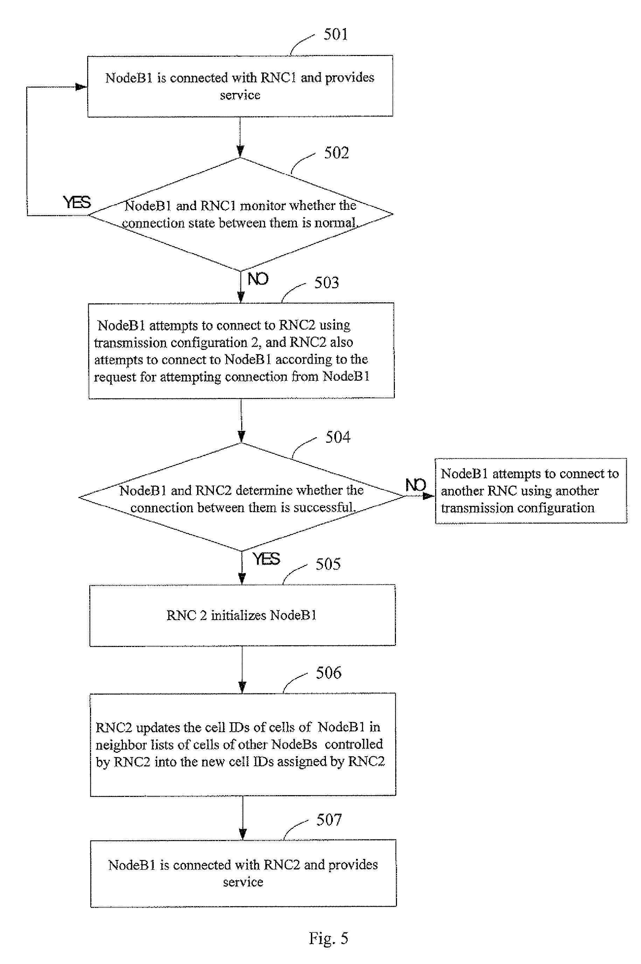

In the system for disaster tolerance of RNC nodes as shown in Tig.2, assuming that NodeB1 is currently connected with RNC1 and provides service, the control flow for the interaction between the NodeB1 and RNC1, RNC2 are described below in combination with Fig.5, so as to explain the method for implementing disaster tolerance of RNC nodes in detail. The method includes steps of:

Step 501: The NodeB1 is connected with the RNC1 and provides service.

Step 502: The NodeB1 and the RNC1 respectively monitor whether the connection state between them is normal. If the connection state between them is normal, the process proceeds to Step 501; otherwise, the process proceeds to Step 503.

Step 503: The NodeB1 attempts to establish connection with RNC2 using transmission configuration 2, and the RNC2 also attempts to establish connection with the NodeB 1 according to the request for attempting connection from the NodeB1.

Here, the RNC2 is configured in advance with transmission parameters for connection with the NodeB1. When the NodeB1 attempts to establish connection with RNC2 using the transmission configuration 2 corresponding to the RNC2, the RNC2 uses the transmission parameters for connection with the NodeB1 to receive the request for establishing connection from the NodeB1, then acknowledges to the NodeB1 and completes the connection establishment process.

Step 504: The NodeB1 and the RNC2 respectively determine whether the connection between them is successful. If the connection between them is successful, the process proceeds to Step 505; otherwise, the NodeB1 attempts to establish connection with another RNC using another transmission configuration.

In the cases the numbers of backup RNCs in the system for disaster tolerance of RNC nodes are different, the step that the NodeB1 attempts to establish connection with another RNC using another transmission configuration is also various, for example: if the NodeB1 only has physical connections with RNC1 and RNC2 and only has transmission configuration 1 and transmission configuration 2, the NodeB1 attempts again to establish connection with RNC1 using transmission configuration 1; if the NodeB1 has physical connection with RNC3 and corresponding transmission configuration 3 in addition to has physical connections with RNC1 and RNC2 and transmission configurations 1 and 2, the NodeB1 attempts to establish connection with RNC3 using the transmission configuration 3. If the NodeB1 has attempted to establish connection with all RNCs using corresponding backup transmission configurations and all the attempts fail, the NodeB1 again selects all the transmission configurations in turn to attempt to establish connection with corresponding RNCs until a successful connection is established. The process flow after the NodeB1 attempts to establish connection with a RNC is shown in the Step 503 and the following steps.

Step 505: The RNC 2 initializes the NodeB1, i.e., assigns new cell IDs for cells of the NodeB1.

Step 506: Since the RNC2 assigns the new cell IDs for the cells of the NodeB1, the RNC2 updates cell IDs of the cells of the NodeB1 in neighbor lists of cells of other NodeBs controlled by the RNC2 into the new cell IDs assigned by the RNC2.

Step 507: The NodeB1 is connected with the RNC2 and provides service.

In the above process flow, when the RNC1 monitors that its connection with the NodeB1 is interrupted or abnormal at Step 502, the RNC1 needs to updates cell IDs of the cells of the NodeB1 in neighbor lists of cells of other NodeBs controlled by the RNC1. If there are only two backup RNCs in the system for disaster tolerance of RNC nodes, the RNC1 may determine that the NodeB1 may connect to the RNC2, therefore the RNC1 updates the cell IDs into the cell IDs assigned by the RNC2. If there are more than two backup RNCs in the system for disaster tolerance of RNC nodes, when the NodeB1 is connected with the RNC2 successfully in Step 504, the RNC2 may determine that the old RNC which formerly controlled the NodeB1 is RNC1 according to the old cell IDs of the NodeB1, and sends a message indicating its successful connection with the NodeB1 to the RNC1 which formerly controlled the NodeB1. The RNC1 may determine that the NodeB1 is connected with the RNC2 successfully after receiving the message, and then updates the cell IDs into the cell IDs assigned by the RNC2.

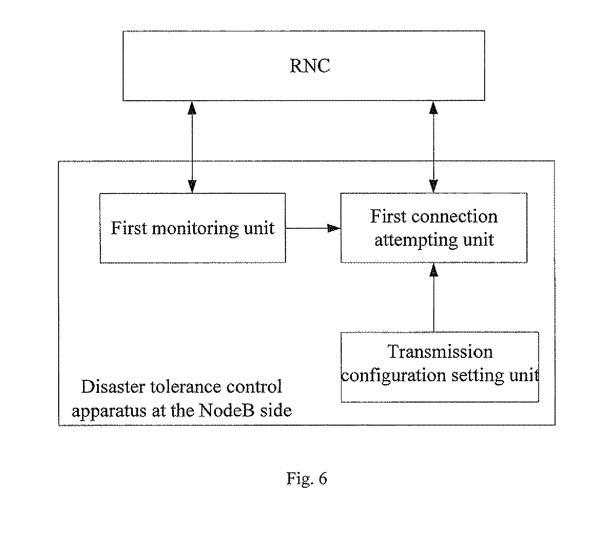

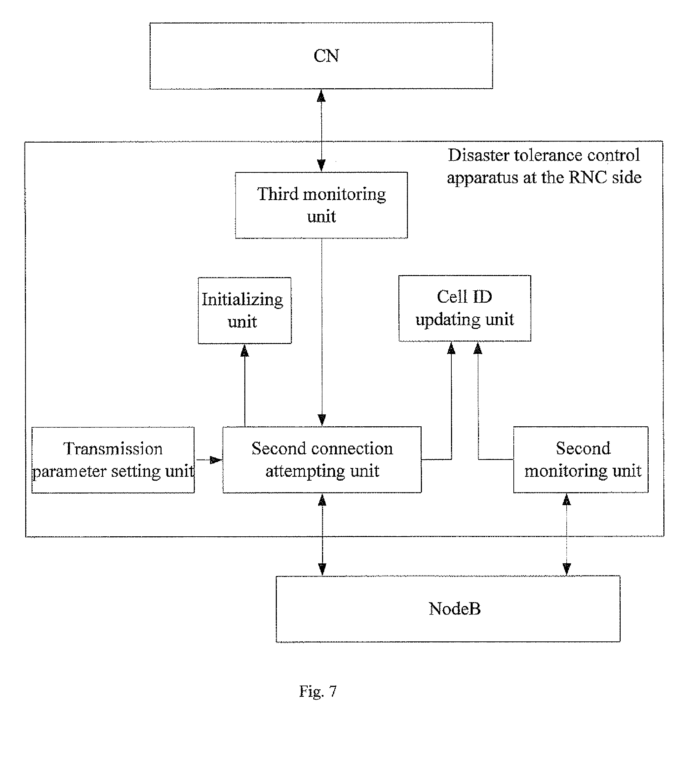

The apparatus structures for controlling above disaster tolerance at NodeB side and RNC side are provided below. Fig. 6 shows the apparatus structure for controlling disaster tolerance at NodeB side, and Fig. 7 shows the apparatus structure for controlling disaster tolerance at RNC side.

As shown in Fig.6, the apparatus for controlling disaster tolerance at NodeB side includes a transmission configuration setting unit, a first monitoring unit, and a first connection attempting unit. The transmission configuration setting unit sets transmission configurations corresponding to respective RNCs. The first monitoring unit monitors the connection state with a RNC, and sends the monitored connection state to the first connection attempting unit. The first connection attempting unit obtains a transmission configuration from the transmission configuration setting unit according to the received connection state with the RNC, and attempts to establish connection with the RNC corresponding to the obtained transmission configuration.

As shown in Tig.7, the apparatus for controlling disaster tolerance at RNC side includes a transmission parameter setting unit, a second connection attempting unit, and an initializing unit. The transmission parameter setting unit sets transmission parameters corresponding to NodeBs. The second connection attempting unit obtains transmission parameters corresponding to a NodeB from the transmission parameter setting unit, and attempts to establish connection with the NodeB according to the transmission parameters, and sends a message indicating the successful connection to the initializing unit. The initializing unit initializes the NodeB which is connected successfully.

The apparatus for controlling disaster tolerance at RNC side may further comprise a cell ID updating unit. The cell ID updating unit updates cell IDs of cells of the successfully connected NodeB in neighbor lists of cells of other NodeBs controlled by the RNC containing the cell ID updating unit into the cell IDs assigned by the RNC containing the cell ID updating unit.

The apparatus for controlling disaster tolerance at RNC side may further comprise a second monitoring unit. The second monitoring unit monitors the connection state with a NodeB, and sends cell IDs of cells of the NodeB having abnormal connection state to the cell ID updating unit. At this time, the cell ID updating unit updates cell IDs of the cells of the NodeB having abnormal connection state in neighbor lists of cells of other NodeBs controlled by the RNC containing the cell ID updating unit.

The apparatus for controlling disaster tolerance at RNC side may further comprise a third monitoring unit. The third monitoring unit monitors the connection state with a CN, and sends the monitored connection state to the second connection attempting unit. At this time, if the connection state with the CN is abnormal or interrupted, the second connection attempting unit actively disconnects all the connections with all the NodeBs controlled by the corresponding RNC.

The schematic network diagrams for illustrating the system for disaster tolerance of RNC nodes are provided below with respect to various cases such as the interruption of connections between NodeB and RNC as well as between RNC and CN, or the fault of RNC as well as the fault of CN, and so on.

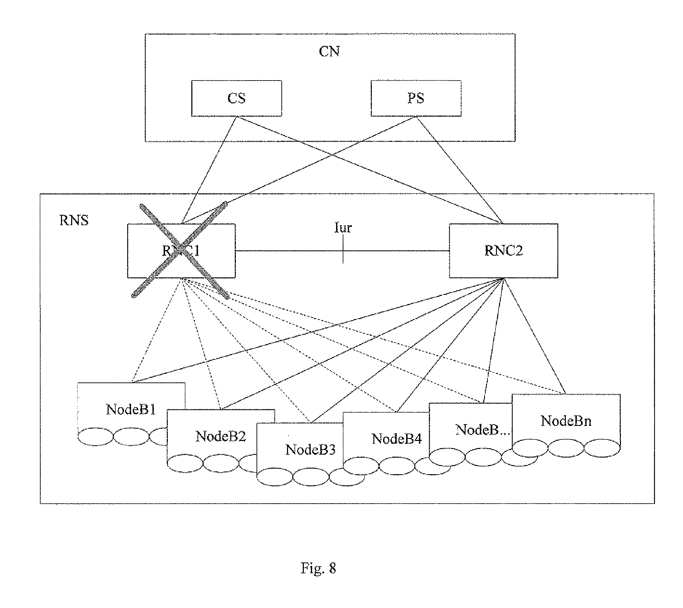

Fig.8 shows a schematic network diagram in the case that a RNC fails in the system for disaster tolerance of RNC nodes. By means of above controls at NodeB side and RNC side, when a NodeB is connected with RNC1 to provide service, if the RNC1 fails or has some accidental disaster occurred, the NodeB may monitor the interruption of connection with the RNC1 in time, and attempt to establish connection with RNC2, if the NodeB is connected to the RNC2 successfully, the NodeB and the RNC2 provide service.

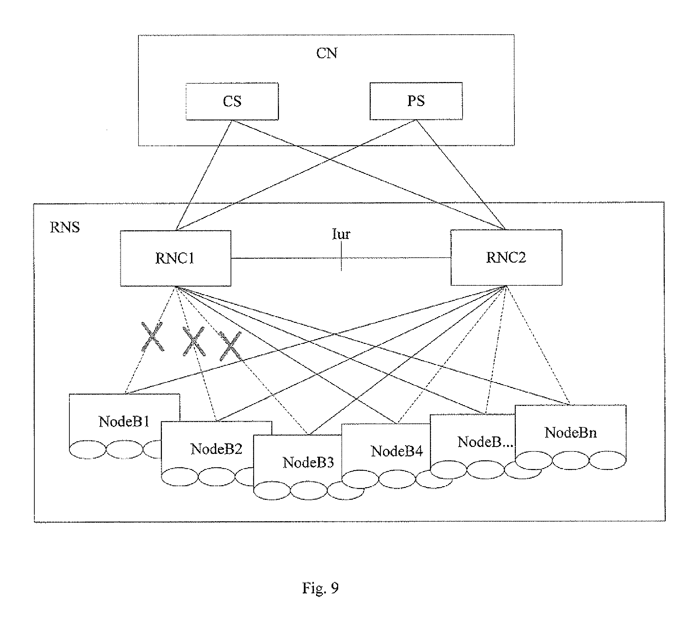

Fig.9 shows a schematic network diagram in the case that a RNC has fault in part or a part of transmission links fail down in the system for disaster tolerance of RNC nodes. When RNC1 cannot connect to NodeB1, NodeB2 and NodeB3 to provide service due to partial fault in the RNC1 or the interruption of the transmission links between the RNC1 and the NodeB1, NodeB2, NodeB3, the NodeB1, NodeB2 and NodeB3 which are influenced by the fault may monitor the interruption of connection with the RNC1 in time, and may select and connect to a normal RNC2 through the control process provided in the embodiments of the present invention, so as to go on providing service.

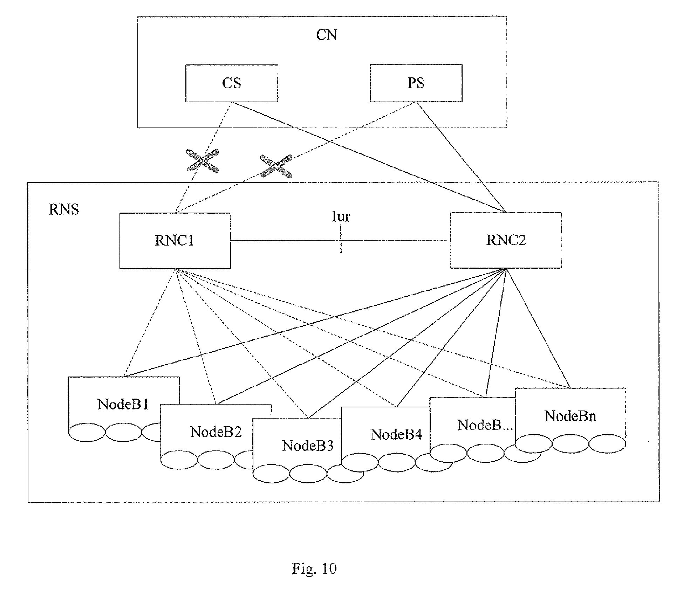

Fig.10 shows a schematic network diagram in the case that the transmission link between a RNC and a CN is interrupted in the system for disaster tolerance of RNC nodes. When RNC1 cannot connect to the CN to provide service due to the interruption of the transmission link between the RNC1 and the CN while the RNC1 itself has no fault, the RNC1 actively disconnects from all NodeBs controlled by the RNC1, so that these NodeBs may monitor the interruption of connection with the RNC1 in time, and then may select and connect to a normal RNC2 through the control process provided in the embodiments of the present invention, so as to go on providing service.

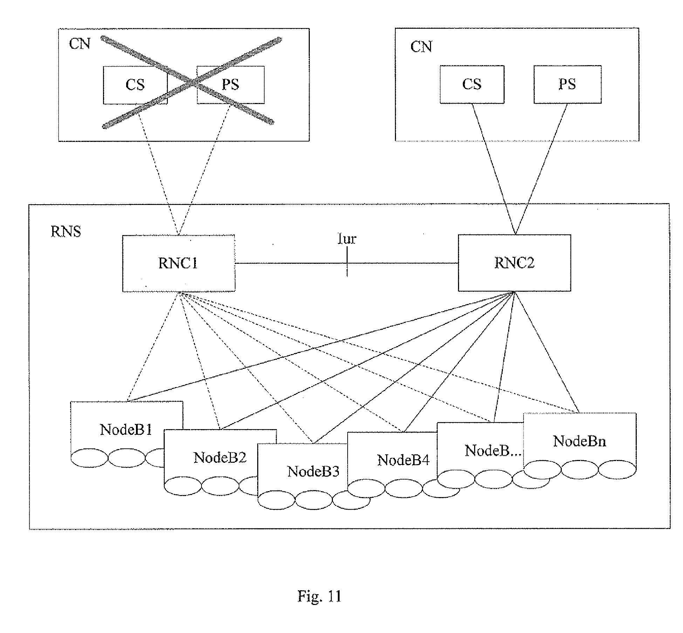

Fig.11 shows a schematic network diagram in the case that a CN connected with a RNC fails in the system for disaster tolerance of RNC nodes. In this network structure, RNC1 and RNC2 are connected with different CNs respectively. When the CN connected with the RNC1 fails and the RNC1 monitors that it cannot connect to the CN, the RNC1 actively disconnects from all NodeBs controlled by the RNC1, so that these NodeBs may select and connect to another RNC and CN through the control process provided in the embodiments of the present invention, so as to go on providing service.

In the system for disaster tolerance of RNC nodes, each NodeB independently determines the state of the transmission link between the NodeB and a currently connected RNC. When the RNC cannot be connected due to fault of the RNC or interruption or abnormality of the transmission link, the NodeB controls to select and connect to a normal operating RNC, so as to go on providing service.

In the system for disaster tolerance of RNC nodes, a RNC may cooperate with a NodeB to establish connection according to a request such as connection attempt from the NodeB; the backup RNCs may deliver messages among each other; the RNC may also independently determine the state of the transmission link between the RNC and a currently connected CN, when the CN cannot be connected due to fault of the CN or interruption or abnormality of the transmission link, the RNC actively disconnects from all NodeBs controlled by itself, so that these NodeBs may select and connect to a normal operating RNC.

In the system for disaster tolerance of RNC nodes, a backup RNC may be a new deployed RNC, or may be an existing RNC in an existing network. The backup RNC may sufficiently utilize existing RNCs in the existing network, for example, every two existing RNCs are configured to be backups for each other. Moreover, the connection between a NodeB and a RNC is not limited to IP network, and may be adapted to various networks, such as Asynchronous Transmission Mode (ATM) network, satellite network, microwave network, and so on.

In the networking process of a practice communication system, two or more RNCs are deployed at different locations. When one RNC occurs cases such as fire hazard, accidental electricity power failure, intended destruction, fault of RNC device itself, fault of transmission link and so on, NodeBs connected with the RNC may select and connect to another RNC to provide service, so that disaster tolerance backups at the level of RNC nodes are implemented, the reliable connectivity of the communication network is guaranteed effectively, and the service quality of the communication network is improved.

The method and system for disaster tolerance of BSC nodes discussed above is not only applicable for Wideband Code Division Multiple Access (WCDMA) system, Time Division-Synchronous Code Division Multiple Access (TD-SCDMA) system of the UMTS network, but also widely applicable to the disaster tolerance backups of BSC nodes in wireless communication systems such as Global System for Mobile communication (GSM), Code Division Multiple Access (CDMA) system, CDMA 2000 system and so on.

The embodiments described above are intended to illustrate the present invention rather than limit the present invention. All the modifications, substitutions, variations without departing the spirit and principle of the present invention, should fall in the protection scope of the present invention.

## Claims

1. A method for disaster tolerance of Base Station Controller, BSC, nodes, wherein physical connections are established between a Base Station, BS and two or more BSCs, transmission configurations corresponding to the respective BSCs are configured in the BS, and connection with a first BSC is established by the BS using a corresponding first transmission configuration, the method comprising steps of:
a) monitoring, by the BS, whether the current connection state with the first BSC is normal, and returning to step a) if the current connection state with the first BSC is normal; otherwise, selecting a second transmission configuration from the transmission configurations configured in the BS and proceeding to step b);
b) attempting, by the BS, to establish connection with a second BSC using a corresponding second transmission configuration;
c) determining, by the BS, whether the connection with the second BSC is successful, and providing services via the second BSC if the connection with the second BSC is successful; otherwise, selecting another transmission configuration from the transmission configurations configured in the BS as the second transmission configuration and returning to step b).

2. The method according to claim 1, wherein the another transmission configuration selected in the step c is the first transmission configuration or a transmission configuration other than the first transmission configuration and the second transmission configuration selected in the step a).

3. The method according to claim 1, wherein,
transmission parameters for connection with the BS are configured in advance in two or more BSCs having physical connections with the BS, the method further comprises steps of:
A) at the second BSC, receiving from the BS a request for attempting to establish connection, and attempting to establish connection with the BS using the transmission parameters for connection with BS;
B) determining, by the second BSC, whether the connection with the BS is successful, and initializing the BS by the second BSC if the connection with the BS is successful; otherwise, returning to step A).

4. The method according to claim 3, wherein the initializing the BS by the second BSC comprises assigning cell IDs for cells of the BS by the second BSC;
the method further comprises updating, by the second BSC, cell IDs of the cells of the BS in neighbor lists of cells of other BSs controlled by the second BSC into the cell IDs assigned by the second BSC.

5. The method according to claim 4, wherein,
after the connection between the second BSC and the BS is established successfully in the step B, the method further comprises:
sending from the second BSC to the first BSC a message indicating that the BS is connected with the second BSC;
updating, by the first BSC, cell IDs of the cells of the BS in neighbor lists of cells of other BSs controlled by the first BSC into the cell IDs assigned by the second BSC, after receiving the message by the first BSC.

6. The method according to claim 5, wherein the sending the message from the second BSC to the first BSC comprises: determining, by the second BSC, an BSC which formerly controlled the BS is the first BSC according to an old cell ID of the BS, and sending the message from the second BSC to the first BSC.

7. The method according to claim 1, the method further comprises:
X) monitoring, by the BSC, whether the connection state with the BS is normal, and returning to step X) if the connection state with the BS is normal; otherwise, proceeding to step Y);
Y) updating, by the BSC, cell IDs of the cells of the BS disconnected from the BSC in neighbor lists of cells of other BSs controlled by the BSC.

8. The method according to claim 7, wherein,
after monitoring, by the BSC, that the connection state with the BS is abnormal in the step X), the method further comprises, before the step Y), determining, by the BSC, which BSC the BS is connected with again;
the updating cell IDs by the BSC in the step Y further comprises: updating, by the BSC, cell IDs of the cells of the BS disconnected from the BSC in neighbor lists of cells of other BSs controlled by the BSC into cell IDs assigned by the BSC with which the BS is connected again.

9. The method according to claim 1, the method further comprises:
monitoring, by the BSC, whether the connection state with a Core Network, CN, is normal, if it is monitored that the connection state with the CN is abnormal, actively disconnecting from all BSs controlled by the BSC.

10. A system for disaster tolerance of Base Station Controller, BSC, nodes, comprising a Core Network, CN, Base Stations, BS, wherein, the system further comprises at least two BSCs;
a BS adapted to have physical connections with the BSCs respectively, be connected with one BSC at a time, and establish connection with another BSC having physical connection with the BS when the connection state with the current BSC is monitored abnormal.

11. The system according to claim 10, wherein the CN is connected with the BSC, and wherein the BSC is further adapted to disconnect from all BSs controlled by the BSC when it is monitored that the connection state with the CN is abnormal.

12. An apparatus for controlling disaster tolerance at Base Station, BS, side, comprising a transmission configuration setting unit, a first monitoring unit, and a first connection attempting unit, wherein
the transmission configuration setting unit is adapted to set transmission configurations of connections between the apparatus and two or more Base Station Controllers, BSCs, respectively;
the first monitoring unit is adapted to monitor a state of connection between the apparatus and a BSC, and send the state to the first connection attempting unit; and
the first connection attempting unit is adapted to obtain another transmission configuration from the transmission configuration setting unit when the state received from the first monitoring unit showing the connection is abnormal, and attempt to establish another connection with another BSC corresponding to the transmission configuration.

13. A apparatus for controlling disaster tolerance at Base Station Controller, BSC, side, comprising a transmission parameter setting unit, a second connection attempting unit, and an initializing unit, wherein
the transmission parameter setting unit is adapted to set transmission parameters of connections between the apparatus and Base Stations, BSs;
the second connection attempting unit is adapted to obtain transmission parameters corresponding to a BS from the transmission parameter setting unit, attempt to establish connection with the BS according to the transmission parameters, and send to the initializing unit a message indicating the successful connection; and
the initializing unit is adapted to initialize the BS which has been connected successfully.

14. The apparatus according to claim 13, further comprising a cell ID updating unit adapted to update cell IDs of cells of the successfully connected BS in neighbor lists of cells of other BSs controlled by the BSC containing the cell ID updating unit into the cell IDs assigned by the BSC containing the cell ID updating unit.

15. The apparatus according to claim 14, further comprising a second monitoring unit adapted to monitor the connection state with a BS, and send to the cell ID updating unit the cell IDs of the cells of the BS having abnormal connection state;
the cell ID updating unit is further adapted to update cell IDs of the cells of the BS having abnormal connection state in neighbor lists of cells of other BSs controlled by the BSC containing the cell ID updating unit.

16. The apparatus according to claim 13, further comprising a third monitoring unit adapted to monitor a state of a connection between the BSC and a CN, and send the monitored connection state to the second connection attempting unit; and
the second connection attempting unit is further adapted to actively disconnect the connections with all BSs controlled by the BSC containing the second connection attempting unit when the state from the second monitoring unit showing the connection with the CN is abnormal.
